Europäisches Patentamt

European Patent Office

Office européen des brevets

(11) Publication number : **0 588 664 A2**

# (12) EUROPEAN PATENT APPLICATION

(21) Application number : **93307371.0**

(22) Date of filing : **17.09.93**

(51) Int. Cl.⁵ : **G01N 1/28**

(30) Priority : **18.09.92 US 947057**

(43) Date of publication of application :
**23.03.94 Bulletin 94/12**

(84) Designated Contracting States :
**DE GB NL**

(71) Applicant : **HALLIBURTON COMPANY**
**P.O. Drawer 1431**
**Duncan Oklahoma 73536 (US)**

(72) Inventor : **Blauch, Matthew E.**
**1125 Grand Boulevard**
**Duncan, Oklahoma 73533 (US)**
Inventor : **Vickers, Keith V.**
**P.O. Box 963**
**Crowley, Texas 76036 (US)**

(74) Representative : **Wain, Christopher Paul et al**
**A.A. THORNTON & CO. Northumberland**
**House 303-306 High Holborn**
**London WC1V 7LE (GB)**

(54) Sample core stabilization.

(57)    An elongate sample core (14) is prepared for
non-destructive analysis, eg. computed to-
mography, by locating it in a container (10) and
filling gaps between the sample and the con-
tainer with a flowable solid stabilizing material
(22).

*Fig.4*

The present invention relates generally to the preparation of core samples for non-destructive analysis.

Computed tomography (CT), commonly known in the medical field as CAT scanning (computerized axial tomography or computer assisted tomography), is a non-destructive analysis technology that provides an image of the internal structure and composition of an object. Using CT technology, images can be obtained which represent cross-sectional axial or longitudinal slices through the object. Each image is produced through the reconstruction of a matrix of x-ray attenuation coefficients by a dedicated computer. The images reflect volume by volume (voxel) electron density variations displayed as gray levels of contrasting CT numbers.

Computed tomography and other non-destructive analysis techniques are used in the petroleum industry for analyzing sample cores in order to determine subterranean formation properties. Using computed tomography, electron density variations over an axial or longitudinal slice of a core sample can be determined and displayed. Additionally, a three-dimensional tomographic representation of the sample core can be obtained by compositing CT data for a series of discrete parallel slices of the sample core.

CT analysis has been used for: examining core structure, core mineral distribution, and core porosity distribution; studying natural and induced formation fractures; selecting plug samples; conducting multiphase core flow displacement experiments; conducting acidizing studies; evaluating formation damage; evaluating in situ formation stress; and conducting core flooding experiments.

When a sample core must be retrieved from a formation which is friable, soft, fractured, and/or unconsolidated, the sample core will typically be obtained using an apparatus composed of: a sample barrel (or sample tube); a liner positioned inside the sample barrel; and a coring bit positioned at the end of the sample barrel. As the sample core is cut from the formation by the coring bit, it is delivered into the liner. The presence of the sample barrel liner ensures better core recovery and sample quality, alleviates core jamming problems, and prevents core damage. Unfortunately, when the sample core is positioned in the liner, a small void space (i.e., an annulus) will exist between the exterior of the sample core and the interior wall of the liner.

After retrieving the sampling apparatus, the liner having the sample core contained therein is removed from the sample barrel and then marked in order to indicate formation depth. The liner and the sample core contained therein are then cut into longitudinal sections suitable for handling and for use in laboratory analysis. After cutting, caps are secured to the ends of the liner sections in order to seal the liner sections and to prevent the core material from falling out of the liner sections. The sealed liner sections protect the core material from atmospheric conditions and from physical blows and impacts.

The sample barrel liner will typically be formed from a material which will allow the undisturbed sample core contained therein to be analyzed using non-destructive techniques such as computed tomography, core gamma logging, and x-ray radiography. Examples of commonly used liner materials include aluminum and fiberglass.

A CT scanning system used for analyzing lined sample cores will typically include: an x-ray tube which provides a collimated x-ray beam; a detector array which (a) receives the x-ray beam after it passes through the sample core and (b) provides a scanning output signal; a means for either rotating and repositioning the sample core with respect to the x-ray tube and detector array or for rotating and repositioning the x-ray tube and detector array with respect to the sample core such that the CT scanning system will operate to thoroughly scan one or a series of slices extending through the sample core; and a dedicated computer which controls scanner functions, processes the scanning information received from the detector array, and generates image reconstructions of the sample core slices.

Each CT scanning slice will typically have a thickness of 2 mm. In order to determine and display the electron density variations existing over a CT scanning slice, the slice is first divided into volume elements (voxels) typically having dimensions of 0.25 mm x 0.25 mm x 2.0 mm. Next, using the scanning information obtained from the detector array, an average material CT number ($N_{CT}$) is calculated for each of the volume elements of the scan slice.

CT number ($N_{CT}$) is a numerical measure of the x-ray absorption properties of the material(s) contained in a given volume element. $N_{CT}$ is expressed in Hounsfield units (HU). The $N_{CT}$ of water is 0 while the $N_{CT}$ of air is -1,000. The CT number of each volume element of a CT scanning slice can be computed as follows:

$$N_{CT} = [(\mu - \mu_w)/\mu_w] \times 1,000 \quad (1)$$

wherein:

$\mu$     is the linear x-ray attenuation coefficient (cm) across the volume element at the x-ray energy level used and

$\mu_w$     is the linear x-ray attenuation coefficient of water (cm) at the x-ray energy level used.

Using the information received as a result of CT scanning, the linear x-ray attenuation coefficient ($\mu$) for each voxel of a CT scanning slice can be computed in accordance with Beer's law as follows:

$$N/N_o = e^{\mu/x} \quad (2)$$

wherein:

$N_o$     is the number of x-ray photons transmitted to the volume element;

$N$     is the number of x-ray photons leaving the volume element; and

$x$     is the linear dimension (cm) of the volume element in the direction of the transmitted x-ray beam.

The linear x-ray attenuation coefficient exhibited by a given volume element is determined by the electron density of the volume element (i.e., by the material composition and the material density of the volume element) as follows:

$$\mu = (\mu/\rho)\rho \quad (3)$$

wherein:

$(\mu/\rho)$     is the mass attenuation coefficient (MAC) of the material contained in the volume element at the x-ray energy level used and

$\rho$     is the material density of the volume element.

When a combination of materials (e.g., a mineral material combined with air, gas, and/or other materials) is contained in a volume element, the overall MAC of the volume element will be determined by the mass weighted average of the mass attenuation coefficients of the individual materials contained in the volume element.

In view of the above, it is apparent that equation (1) can be rewritten as

$$N_{CT} = \frac{(\mu/\rho)\rho}{(\mu_w/\rho_w)\rho_w} - 1 \times 1000 \quad (4)$$

wherein:

$(\mu_w/\rho_w)$     is the mass attenuation coefficient of water at the x-ray energy level used and

$\rho_w$     is the density of water.

Additionally, since the mass attenuation coefficients of the various elements and compounds likely to be present in a core sample can be determined from the nuclear data literature, $N_{CT}$ values for these elements and compounds can be computed and compared to the actual results of the CT analysis to determine the composition and density distributions of the CT scanning slices.

Having determined the $N_{CT}$ value of each volume element of a CT scanning slice, a two-dimensional video image of the slice can be obtained by (a) relating the CT number values obtained for each voxel of the slice to values on the linear scale ranging from black to white (i.e., the gray scale) and then (b) causing the individual volume elements of the slice to correspond with the individual picture dot elements (i.e., pixels) of the video image. In order to produce a color image, the gray scale values obtained in step (a) can be converted to values on the linear red scale.

Using the CT image thus obtained, the general material composition distribution of a CT scanning slice will typically be determined by displaying the slice as it relates to either the overall gray scale or the overall red scale. After the material composition distribution of the slice is determined, the density of each portion of the slice can be determined by examining the slice as it relates to narrower portions of either the gray scale or the linear red scale. For a given mineral composition, a higher CT number will generally indicate a higher density and a lower porosity.

A significant problem encountered in the CT analysis of samples cores involves the occurrence of x-ray beam hardening. As an x-ray beam travels through a sample core, the lower energy photons of the beam are absorbed much more rapidly than are the beam's higher energy photons. Consequently, the average energy of the beam increases-(i.e., the beam is hardened) as it travels through the sample core due to the fact that a high relative proportion of the beam's low energy photons are quickly absorbed in the initial outer region of the core. The rapid initial absorption of low energy photons in the outer region of the sample core also yields a beam hardening artifact which cloaks the outer region of the CT image. In the CT images, the beam hardening artifact will appear as a lower gray scale area. Typically, the beam hardening artifact will resemble a lighter halo which fades continuously from the outer region of the CT image toward the center of the CT image and thus produces a bull's-eye-like visual effect.

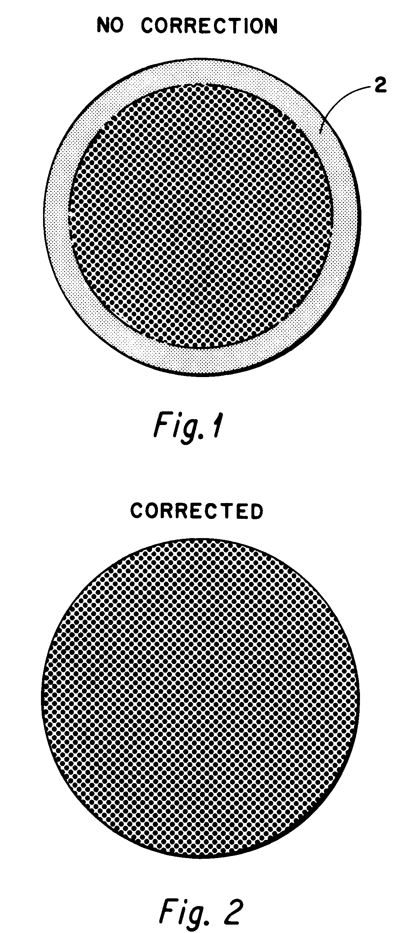

A CT image including a beam hardening artifact 2 is illustrated in Figure 1. A corresponding CT image which has been corrected to remove the beam hardening artifact 2 is shown in Figure 2. Beam hardening artifact 2 is light in color. In a CT image of the type illustrated in Figure 1, the appearance of a light color would normally indicate the presence of a region having a high relative electron density. Thus, unless the beam hardening artifact is somehow removed from the CT image, the artifact cquld be mistakenly interpreted as merely indicating a very high density sample region. Additionally, the artifact obscures the actual features of the outer region of the core such that these features cannot be readily viewed and analyzed. Further, the beam hardening artifact can introduce a substantial amount of error into the statistical CT number analysis of the CT scanning data.

The detrimental effects of beam hardening in sample core analysis are particularly great when the x-ray beam must travel through a region of extremely low density (e.g., through the annulus existing between the exterior of the sample core and the interior wall of the liner) immediately before entering the sample core. As will be understood by those skilled in the art, severe attenuation of an x-ray beam can occur when the beam is conducted through alternating regions of greatly differing density.

In some instances, beam hardening artifacts can be at least partially filtered out during CT image reconstruction by means of an imaging software correction. However, such corrections typically do not completely eliminate the effects of beam hardening. Further, the precise beam hardening corrections necessary for a given sample core will depend upon the actual material composition of the sample core and the condition of the sample core. Thus, the composition and condition of a sample core must be known in advance in order for proper beam hardening corrections to be made.

It is also noted that, due to (1) the presence of the void space (i.e. the annulus) existing between the exterior of the sample core and the interior wall of the liner, and (2) the presence of additional void spaces within the core itself, significant movement and breakage of the core can occur within the liner whenever the lined sample is jarred or repositioned during handling or transport. Although the size of the annulus between the exterior of the sample core and the interior wall of the liner can be minimized to a certain degree by selecting a properly sized liner, the annulus cannot be completely eliminated.

Thus, a need presently exists for a means of improving the CT image resolution of lined sample cores by reducing the detrimental effects of x-ray beam hardening. Additionally, a need presently exists for a means of stabilizing a lined core sample such that the sample core will not move or break within the liner when the lined sample is jarred or repositioned during handing or transport.

The present invention provides a method of stabilizing a sample core in a container which comprises said sample in the container such that there is a space between at least a portion of the length of said sample and an inner wall of the container, and passing a flowable solid stabilizing material into said space.

In one embodiment, the method comprises the steps of: (a) elevating a first end of the liner; (b) pouring a flowable solid stabilizing material into the first end of the liner; and (c) packing the stabilizing material along the length of the sample core between the exterior of the core and the inner wall of the liner.

The present invention further provides a method of analyzing an elongate sample core using a non-destructive analyzing procedure, wherein during the analysing step, the core is stabilized in an elongate sample container by the method of the invention.

In the core stabilizing method of the invention, the annulus existing between the exterior of the core sample and the interior wall of the liner, as well as other void spaces within the sample core itself, is packed with a flowable solid stabilizer material. Using the method, a surprisingly thorough degree of stabilizer material packing is achieved along the entire length of the sample core. The stabilizer material packing operates to prevent the sample core from breaking and/or moving within the liner. Additionally, the stabilizer material will not hinder the removal of the sample core from the liner. Further, the stabilizer material alleviates the beam hardening problems discussed hereinabove by (a) filling the annulus between the exterior of the sample core and the interior wall of the liner, (b) filling other void spaces within the sample core itself. and (c) prefiltering the CT scanning beam before it enters the outer region of the sample core.

In order that the invention may be more fully understood, reference is made to the accompanying drawings, wherein:

Figure 1 illustrates a CT scanning image including a beam hardening artifact 2.

Figure 2 illustrates a corrected CT scanning image wherein beam hardening artifact 2 is removed.

Figure 3 provides an elevational side view of a packing system 8 useful in conducting the core stabilization method of the invention.

Figure 4 provides a cutaway elevational side view of packing system 8 of Figure 3.

As indicated above, the inventive core stabilization method is particularly well-suited for use in stabilizing lined sample cores (i.e., sample cores held in sample liners). In the inventive method, a sample liner having a sample core contained therein is first removed from the sample barrel or sample tube of a coring apparatus and then cut into workable sections for laboratory analysis. Each section will typically be five feet or less in length. Next, each of these lined sections is stabilized in accordance with the inventive method.

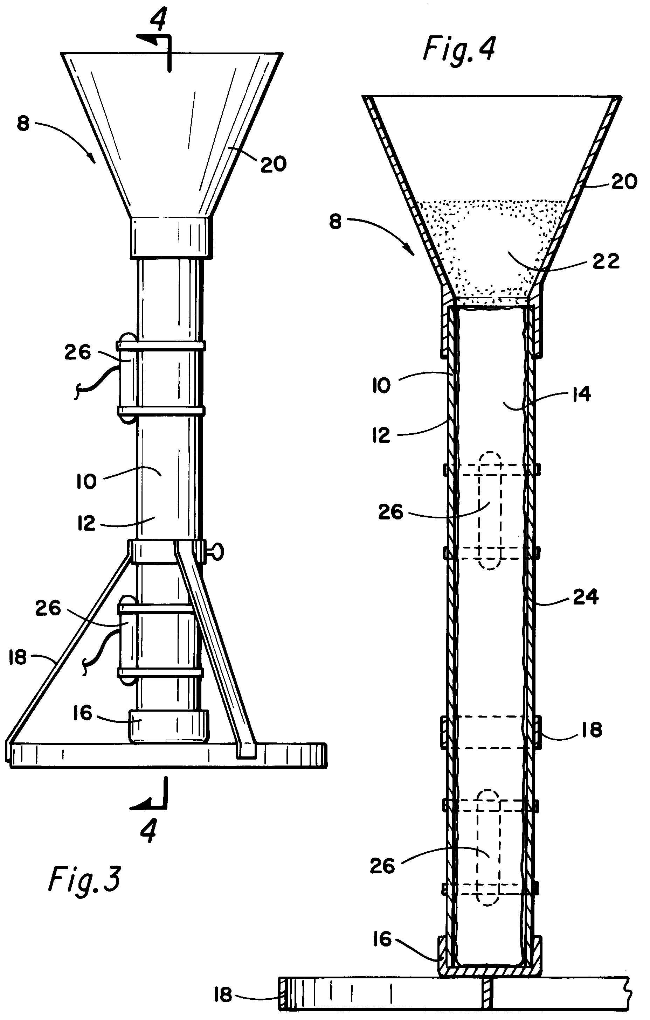

As illustrated in Figures 3 and 4, a lined sample core section 10 including a liner 12 and a sample core 14 is preferably stabilized in accordance with the inventive method by placing a cap 16 on one end of section 10 and then raising the other end of section 10 such that section 10 is placed in a substantially vertical position. A receptacle 18 or similar device is preferably used to hold section 10 in vertical position. Next, a cone-shaped feeder 20 is preferably positioned on the open upper end of section 10. A flowable solid stabilizer material 22 is then poured into or otherwise placed in cone feeder 20 such that the stabilizer material is allowed to flow into the annulus 24 existing between the exterior of the sample core and the inner wall of the sample liner.

During the inventive core stabilization process, lined sample core section 10 is preferably agitated in order to cause the stabilizer material 22 in cone feeder 20 to flow into and become packed in annulus 24. The agitation of the lined sample core also causes the stabilizer material 22 to flow into and become packed in void spaces existing within the sample core itself. The lined sample core can be agitated in accordance with the inventive method by manually tapping the sample liner, by positioning strap-on ultrasonic vibrators 26 on the sample liner, or by other comparable means.

After lined sample-core section 10 is packed with stabilizer material 22, cone feeder 20 is removed from the open upper end of lined section 10 and a cap, substantially identical to cap 16, is placed on said open upper end. These caps operate to seal lined section 10 such that sample core 14 is held in liner 12 and is protected from atmospheric conditions.

After being stabilized in accordance with the inventive method, lined section 10 can be readily analyzed using various non-destructive analysis techniques. Examples of such techniques include CT scanning, core gamma logging, and x-ray radiography. Stabilized section 10 is preferably analyzed using a computed tomography technique of the type described hereinabove.

As mentioned above, the inventive core stabilization method provides a surprisingly thorough degree of packing along the entire length of the sample core. The packed stabilizer material supports and protects the sample core within the sample liner such that the sample core is prevented from moving and breaking within the liner. The stabilizer material also greatly reduces the effects of beam hardening during CT scanning and otherwise improves CT image resolution by: (a) acting as a beam prefilter which filters (i.e., prehardens) the beam before it penetrates the exterior of the sample core; (b) filling void spaces within the lined sample such that the degree of attenuation that would otherwise occur as the beam travels between alternating regions of very high and very low density is reduced; and (c) reducing the image contrast which would otherwise exist between the gas and/or air filled void spaces and the core.

The sample liner used in conjunction with the inventive core stabilization method is preferably formed from a material which will allow an undisturbed sample core contained therein to be analyzed by CT scanning and/or by other non-destructive core analysis techniques. Examples of suitable liner materials include aluminum and fiberglass. During on-site core retrieval, flexing of the sample core within the sample liner can occur when the lined sample core is initially laid from vertical to horizontal position. This flexing of the sample core can be minimized by using a heavy-walled sample liner. Alternatively, or in addition, such flexing can be substantially prevented by the use of a core support brace.

In order to obtain superior CT imaging results, the flowable solid stabilizer material used in the inventive core stabilization method is preferably a material which (a) will readily flow into and pack the void spaces in the lined sample, (b) has a low mean atomic number relative to the mean atomic number of the core material, and (c) has a material bulk density which is not significantly greater than, and is preferably equal to or less than, the material density of the core material. Such materials will not be visible (i.e., will appear black) in most gray scale or linear red scale CT images. Most preferably, the stabilizer material used in the inventive method has a CT number not exceeding about 1000. Additionally, the stabilizer material is preferably a material which will not affect the native state properties (e.g., wettability, saturations, gamma ray response, etc.) of the sample core and which will not interfere with the removal of the sample core from the liner.

Examples of stabilizer materials preferred for use in the inventive method include plastic beads (e.g., polypropylene beads) and quartz sand. In order to fill fractures and other voids in a lined sample core, the stabilizer material must include at least some particles which will physically fit into these voids (i.e., the stabilizer material must include at least some particles which are smaller than the voids themselves). Thus, the particle size of the stabilizer material used on any given case can be changed as necessary to obtain a desired degree of packing. The stabilizer material presently preferred for use in the inventive method is rounded and highly sorted quartz sand consisting of particles having sizes of between about 20 and 40 mesh. 20-40 mesh rounded quartz sand has a bulk density which is close to or slightly less than the densities of most solid formation materials.

The following example is provided in order to further illustrate the present invention.

## Example

A friable, location oriented, devonian shale sample core was obtained using a core cutting apparatus comprising a coring bit, a sample barrel, and an aluminum sample barrel liner. The sample core had a diameter of four inches. In order to minimize fluid contact with the sample core, an air mist coring fluid was used during the core cutting operation.

Upon retrieval, the sample liner having the sample core contained therein was removed from the sample barrel. The sample liner was then marked for depth and cut into segments of four feet in length. Each segment was stabilized in accordance with the inventive core stabilization method using well rounded and highly sorted 20-40 mesh quartz sand.

When stabilizing a lined sample segment in accordance with the inventive method, one end of the lined sample segment was first capped with a rubber end cap. The lined sample segment was then placed in vertical position such that its capped end was on bottom and its open end was on top. Next, a cone-shaped feeder was positioned on the open end of the lined sample segment.

In order to pack the lined sample segment with the stabilizer material, the stabilizer material was poured into the cone feeder and the exterior of the lined sample segment was repeatedly tapped with a hammer. This packing procedure was continued until the stabilizer material stopped flowing into the lined sample segment.

After the packing procedure was completed, the cone feeder was removed from the open end of the lined sample segment and said open end was capped with a rubber end cap. The packed sample core was then transported to a laboratory for CT analysis.

The CT apparatus used for analyzing the packed sample core segments included a fourth generation TECHNICARE 2060 scanner coupled with a micro VAX 3900 computer having special hardware for CT image display. The CT apparatus operated with an x-ray tube voltage of 120 KVp, a scanning slice thickness of 2 mm, a scanning diameter of 12.5 cm, and a slice spacing of 2 inches. The CT apparatus provided a 512 x 512 image with each pixel thereof representing a scanning slice volume element having the dimensions of 0.25 mm x 0.25 mm x 2.0 mm. The CT image was adjusted to allow the display of air or gas filled void spaces and of stabilization material filled spaces within the packed core segments.

Prior to conducting this testing procedure, it was not known whether void spaces along the entire length of a lined sample core segment could be successfully filled with stabilizer material. However, the CT imaging results obtained in these tests showed that a surprisingly thorough degree of packing was achieved along the entire length of the sample segment. Specifically, the CT imaging results showed that, along the entire length of each lined sample segment tested, the inventive method was successful in packing even fine core fractures (i.e., core fractures having widths essentially equal to the diameter of the smallest stabilizer material particles) and very tight annular regions.

The CT scanning images also revealed that the stabilization material used in the inventive method had surrounded and thereby preserved areas of natural breakage and rubblization within the sample core. Typically, such areas would otherwise become shifted and chaotically arranged within the liner during handling and transport.

The CT scanning results additionally showed that, as revealed by the consistent alignment of core fractions with scribe marks placed on the liner following retrieval, the packed stabilizer material substantially prevented the sample core from shifting and rolling within the liner during transport and handling. Further, the packed stabilizer material substantially improved the CT imaging response of the sample core segments by greatly reducing the amount of beam hardening artifact generated during the scanning procedure.

## Claims

1. A method of stabilizing a sample core (14) in a container (10), which comprises said sample (14) in the container (10) such that there is a space (24) between at least a portion of the length of said sample and an inner wall of the container, and passing a flowable solid stabilizing material (22) into said space.

2. A method according to claim 1, wherein said container (10) is a sample liner (12).

3. A method according to claim 2, wherein said liner (12) is formed of aluminum or fiberglass.

4. A method according to claim 1,2 or 3, wherein said stabilizing material (22) has a CT number not exceeding 1000.

5. A method according to claim 1,2,3, or 4, wherein said stabilizing material (22) comprises quartz sand or plastic beads.

6. A method according to claim 5, wherein the stabilizing material (22) is quartz sand having a particle size of from 20 to 40 mesh.

7. A method according to any of claims 1 to 6, which further comprises the step of filling voids in said sample core (14) with said stabilizing material (22) along said portion of the length of said sample core.

8. A method of analyzing an elongate sample core (14) using a non-destructive analyzing procedure, wherein the core is stabilized in an elongate container (10) by the method of any of claims 1 to 7.

9. A method according to claim 8, wherein the core is analyzed using a computed tomography technique.

10. A prepared sample for non-destructive analysis, which comprises an elongate container (10), a sample core (14) in the container. and a solid stabilizing material (22) flowed between the sample and the container wall to stabilize the sample in the container.

NO CORRECTION

Fig. 1

CORRECTED

Fig. 2

Fig.4

Fig.3